# EUROPEAN PATENT APPLICATION

(11) **EP 4 372 350 A1**
(43) Date of publication of application: **22.05.2024**
(21) Application number: 22207698.6
(22) Date of filing: 16.11.2022
(51) Int. Cl.: G01M 17/00, G01M 17/007, B66F 3/00, F16M 11/04, F16M 11/18

(54) **HEIGHT POSITIONING SYSTEM FOR MEASUREMENT EQUIPMENT**

(71) Applicant: Siemens Industry Software NV, 3001 Leuven (BE)
(72) Inventor: Coppens, Gunther, 3012 Wilsele (BE); Knechten, Tom, 3740 Rosmeer (NL); Lewandowski, Tomasz, 3012 Wilsele (BE)
(74) Representative: Siemens Patent Attorneys

(57) **Abstract**

Height positioning system (HPS) for measurement equipment (MEQ) to be positioned in a passenger compartment (PAC), wherein said system is to be placed on a passenger seat (PST). To avoid inaccuracies of positioning said system comprising,
- a seat surface contact element (SCE),
- a support element (SEL) for supporting said measurement equipment (MEQ),
- a height adjustment system (HAS) between said seat surface contact element (SCE) and said support element (SEL), wherein said height adjustment system (HAS) enables to adjust the distance between the seat surface contact element (SCE) and said support element (SEL).

## Description

### FIELD OF THE INVENTION

The invention relates to a height positioning system for measurement equipment to be positioned in a passenger compartment, wherein said system is to be placed on a passenger seat.

Reciprocal acoustic measurements relate to measurements in the position of a normal human ear of a person in a compartment. The person may be the driver operating the machine in question. Operating the machine, which may in most cases be a vehicle, produces noise which is recognized by the operator himself or other persons involved or present in the compartment. This sound impression of the operator can only be realistically assessed if correctly measured at the exact position of the operator's ears.

Reciprocal acoustic measurements at operator ear location require accurate and reproducible height positioning of the acoustic measurement system respectively microphones. Reciprocal acoustic measurements are of interest during the design of passenger compartments or passenger cabins in vehicles. Such compartments refer to any of these areas designated for passengers. The vast majority is found in automobile passenger cars. By definition this area of the vehicle is physically separated from the engine compartment, trunk or boot. While the passenger compartment sometimes excludes the driver's area the term in the meaning of this document explicitly includes the driver's area. In the meaning of this invention the compartment may belong to any kind of vehicle or car or to an aircraft or any area designed for humans in a railway ship or boat.

### BACKGROUND OF THE INVENTION

Currently, an experimental setup requires the operator to defy gravity while positioning and fixing the measurement instrument on ear location. The operator is challenged by nonoptimal working conditions when adjusting sensor positions most accurately. For example, in a vehicle compartment the space normally assigned to the driver or passenger is basically occupied by the experimental setup. The operator who needs to adjust the height positioning of the sensors most exactly to the normal ear position of the passenger or driver is left with only marginal possibilities to put himself in a ergonomic, let alone comfortable position. While temporarily supporting the equipment against gravity the operator needs to accurately reproduce a specific height position of the sensor equipment. After having finally found the correct height position of the equipment the operator needs to secure this specific position without amending the setup. Often this tedious and exhausting process results in a compromise which is spontaneously considered by the operator to be sufficiently accurate when considering the extra work for additional accuracy.

### SUMMARY OF THE INVENTION

The object of the invention is achieved by the independent claim. The dependent claims describe advantageous developments and modifications of the invention.

In accordance with the invention there is provided a solution for the above-described problems by the incipiently defined system said system comprising,
- a seat surface contact element,
- a support element for supporting said measurement equipment,
- a height adjustment system between said seat surface contact element and said support element, wherein said height adjustment system enables to adjust the distance between the seat surface contact element and said support element.

According to another preferred embodiment said height adjustment system comprises a locking or securing preferably self-locking mechanism enabling to secure the adjusted distance between the seat surface contact element and said support element in a specific position.

Another preferred embodiment provides said height adjustment system comprising:
- a nut with a segment of right-handed thread and a segment of left-handed thread, both segments being aligned coaxially,
- a right-handed thread bolt,
- a left-handed thread bolt,
wherein said nut's right-handed thread being engaged with said right-handed thread bolt and said nut's left-handed thread being engaged with said left-handed thread bolt, wherein one of said bolts is connected to said seat surface contact element and the other to said support element,
such that when said nut is turned the distance between the seat surface contact element and said support element changes.

Another preferred embodiment provides said height positioning system wherein said height adjustment system comprises a guiding element, said guiding element being rigidly connected to said seat surface contact element and comprising at least one sliding surface interacting with at least one sliding surface of said support element, wherein said sliding support prevents rotation of said support element relative to said seat surface contact element. Said guiding element extending from said seat surface contact element to said support element, even, when the distance between said seat surface contact element to said support element is adjusted to the maximum.

As a preferred embodiment said threads of said nut are self-locking wherein said threads of said nut are preferably single-start trapezoidal threads. The above mentioned locking mechanism enabling to secure the adjusted distance between the seat surface contact element and said support element in a specific position may be realized like that without additional function elements.

Another preferred embodiment provides a integrated height limitation element which mechanically limits the adjustment range to a maximum height end-position. This prevents to exceed adjustment limits which might damage the arrangement or result in a mechanically unstable support.

The properties, features and advantages of this invention described above, as well as the manner they are achieved, become clearer and more understandable in the light of the following description and embodiments, which will be described in more detail in the context of the drawings. This following description does not limit the invention on the contained embodiments. Same components or parts can be labeled with the same reference signs in different figures. In general, the figures are not for scale. It shall be understood that a preferred embodiment of the present invention can also be any combination of the dependent claims or above embodiments with the respective independent claim.

### BRIEF DESCRIPTION OF THE DRAWINGS

Embodiments of the invention are now described, by way of example only, with reference to the accompanying drawings, of which:
- Figure 1: shows a side view of a height positioning system according to the invention;
- Figure 2: shows a side view of a height positioning system according to the invention when being placed on a passenger seat;
- Figure 3: shows a nut of a height adjustment system according to the invention.

The illustration in the drawings is in schematic form.

In the Figures, like reference numerals designate like or functionally equivalent elements, unless otherwise indicated.

### DESCRIPTION OF THE DRAWINGS

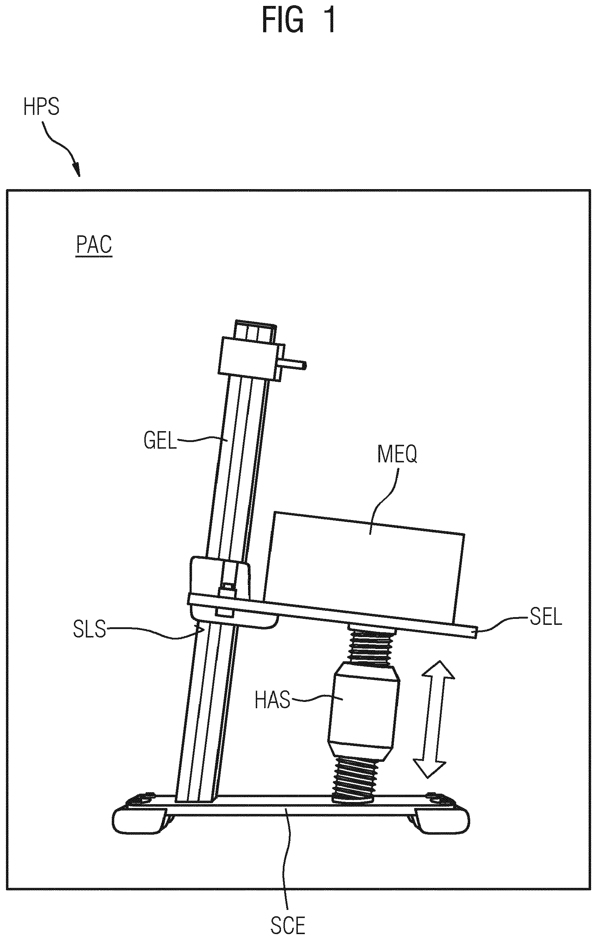

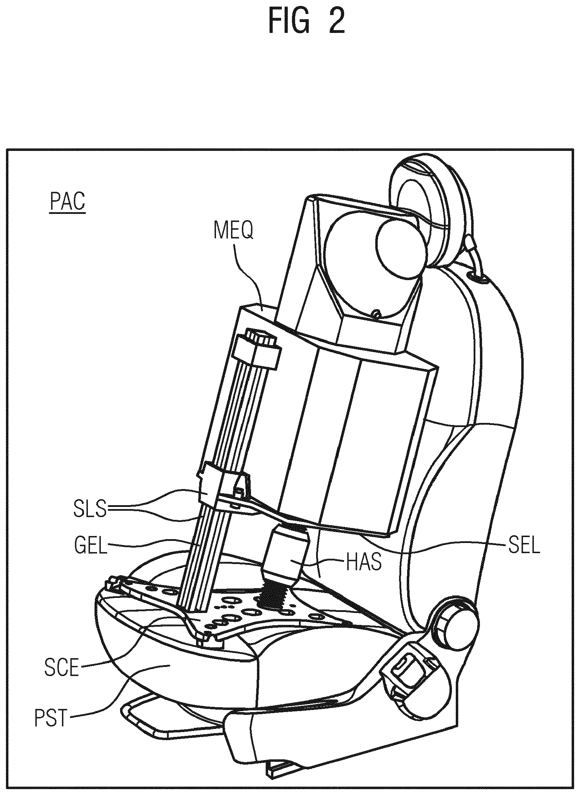

Figure 1 shows a height positioning system HPS to be positioned in a passenger compartment PAC. The system is to be placed on a passenger seat PST (see figure 2), said system comprising a seat surface contact element SCE. Further said system comprises a support element SEL for supporting measurement equipment MEQ to be positioned preferably in the area of a human ear of a person normally occupying the seat. Between said seat surface contact element SCE and said support element SEL a height adjustment system HAS is provided, wherein said height adjustment system HAS enables to adjust the distance between the seat surface contact element SCE and said support element SEL. This adjustment enables an easy and accurate height position reproduction for the measurement equipment respectively the microphones.

The height adjustment system HAS comprises a guiding element GEL, which is rigidly connected to said seat surface contact element SCE). The guiding element GEL comprises at least one sliding surface SLS interacting with at least one sliding surface SLS of said support element SEL, wherein said sliding support prevents rotation of said support element SEL relative to said seat surface contact element SCE. Further the guiding element GEL prevents tilting movements of the support element SEL relative to said seat surface contact element SCE.

Figure 2 shows a typical application of the height positioning system HPS being placed on a passenger seat PST in a passenger compartment PAC. Measurement equipment MEQ is put on the support element SEL.

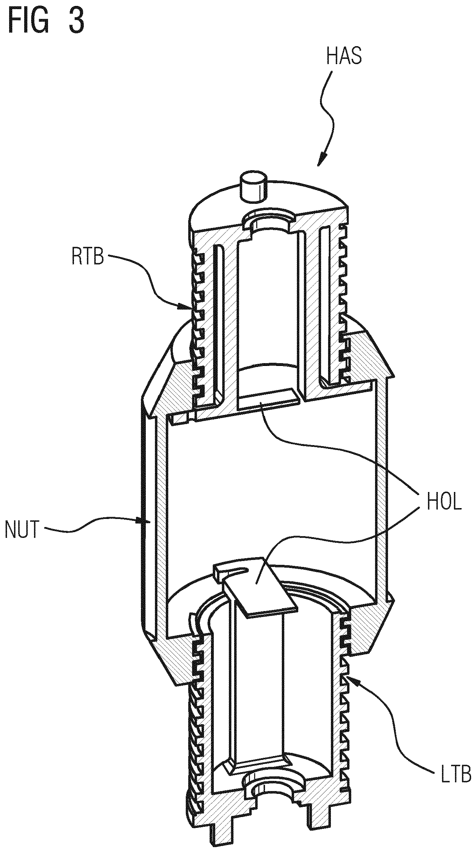

Figure 3 shows details of the height adjustment system HAS. The nut NUT of the height adjustment system HAS comprises a segment of right-handed thread and a segment of left-handed thread. These both segments are aligned coaxially and are engaged with a right-handed thread bolt RTB, and a left-handed thread bolt LTB.

One of said bolts is connected to said seat surface contact element SCE and the other to said support element SEL, such that when said nut NUT is turned the distance between the seat surface contact element SCE and said support element SEL changes.

To prevent unintentional changes of the height position the threads of said nut NUT are self-locking. As shown in Figure 3 said threads of said nut NUT are single-start trapezoidal threads. The design of the nut NUT and bolts BLT are suitable to be generated by additive manufacturing. To avoid adjustment beyond the mechanical limits of the nut NUT and bolt BLT arrangement internal hook elements HOL are provided blocking the transversal movement of the bolts beyond a certain limit. These internal hook elements HOL act as an integrated height limitation which mechanically limit the adjustment range to a maximum height end-position.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Height positioning system (HPS) for measurement equipment (MEQ) to be positioned in a passenger compartment (PAC), wherein said system is to be placed on a passenger seat (PST), said system comprising,
- a seat surface contact element (SCE),
- a support element (SEL) for supporting said measurement equipment (MEQ),
- a height adjustment system (HAS) between said seat surface contact element (SCE) and said support element (SEL), wherein said height adjustment system (HAS) enables to adjust the distance between the seat surface contact element (SCE) and said support element (SEL).

2. Height positioning system according to claim 1, wherein height adjustment system (HAS) comprises a locking mechanism enabling to secure the adjusted distance between the seat surface contact element (SCE) and said support element (SEL) in a specific position.

3. Height positioning system according to claim 1, wherein said height adjustment system (HAS) comprises:
- a nut (NUT) with a segment of right-handed thread and a segment of left-handed thread, both segments being aligned coaxially,
- a right-handed thread bolt (RTB),
- a left-handed thread bolt (LTB),
wherein said nut's right-handed thread being engaged with said right-handed thread bolt and said nut's left-handed thread being engaged with said left-handed thread bolt, wherein one of said bolts is connected to said seat surface contact element (SCE) and the other to said support element (SEL),
such that when said nut (NUT) is turned the distance between the seat surface contact element (SCE) and said support element (SEL) changes.

4. Height positioning system according to claim 1, wherein said height adjustment system (HAS) comprises a guiding element, said guiding element being rigidly connected to said seat surface contact element (SCE) and comprising at least one sliding surface interacting with at least one sliding surface of said support element (SEL), wherein said sliding support prevents rotation of said support element (SEL) relative to said seat surface contact element (SCE).

5. Height positioning system according to claim 3, wherein said threads of said nut (NUT) are self-locking.

6. Height positioning system according to claim 5, wherein said threads of said nut (NUT) are single-start trapezoidal threads.

7. Height positioning system according to one of the previous claims, wherein said height adjustment system (HAS) comprises a height limitation element which mechanically limits the height adjustment range to a maximum height end-position.
